# EUROPÄISCHE PATENTANMELDUNG

(11) **EP 2 065 559 A2**
(43) Veröffentlichungstag der Anmeldung: **03.06.2009**
(21) Anmeldenummer: 08105746.5
(22) Anmeldetag: 07.11.2008
(51) Int. Cl.: E21D 20/02, E21B 21/00

(54) **Selbstbohrender Verbundanker**

(30) Priorität: 30.11.2007 DE 102007057763
(71) Anmelder: HILTI Aktiengesellschaft, 9494 Schaan (LI)
(72) Erfinder: Bayerl, Michael, 86842 Türkheim (DE); Ludwig, Wolfgang, 86874 Zaisertshofen (DE); Wieczorek, Kolja, 86899 Landsberg (DE); Heemann, Kay, 86916 Kaufering (DE)

(57) **Zusammenfassung**

Gegenstand der vorliegenden Erfindung ist ein selbstbohrender Verbundanker (10) für den Berg- und Tunnelbau, mit einem eine Längsachse (L) definierenden Ankerrohr (11), welches ein erstes Ende (12) mit einem Bohrkopf (13) und ein freies zweites Ende (14) aufweist, mit einem in dem Ankerrohr (11) angeordneten Innenrohr (15), das einen Innenraum (16) zur Aufnahme einer auspressbaren Masse (30) aufweist, mit einem zwischen dem Ankerrohr (11) und dem Innenrohr verlaufenden Zwischenraum (17), mit einer ersten in Bezug auf die Längsachse (L) axialen Öffnung (18) im Bereich des freien zweiten Endes (14), die mit dem Innenraum (16) im Innenrohr (15) kommuniziert, und mit wenigstens einer Auslassöffnung (20) im Bereich des Bohrkopfs (13). Im Bereich des freien zweiten Endes (14) ist dabei wenigstens eine zweite in Bezug auf die Längsachse (L) radiale Öffnung (19) vorgesehen, die über den Zwischenraum (17) mit der wenigstens einen Auslassöffnung (20) in Verbindung steht.

## Beschreibung

Die vorliegende Erfindung betrifft einen selbstbohrenden Verbundanker der im Oberbegriff von Patentanspruch 1 genannten Art. Derartige selbstbohrende Verbundanker werden im Berg und Tunnelbau eingesetzt, wo sie der Sicherung von Hohlräumen, wie Tunneln, Stollen oder dergleichen, dienen. Bei der Erstellung von Hohlräumen werden die mechanischen Eigenschaften und insbesondere die Tragfähigkeit der Gebirgsschichten vermindert. Diese Gebirgsschichten werden mittels der Verbundanker an weiter entfernten, unbeschädigten Gebirgsschichten verankert und so an diesen gesichert.

Der Setzvorgang bei bekannten Verbundankern wird in zwei Schritten vollzogen. Im ersten Schritt wird der Verbundanker mittels des Bohrgerätes in den Untergrund gebohrt. Das durch den Bohrkopf des Bohrankers an dessen bohrrichtungsseitigem Ende abgebaute und zerkleinerte Gestein, wird durch die am Bohrkopf angeordneten Austrittsöffnungen und dem Zwischenraum zwischen der Wandung der Bohrung und dem Aussenumfang des Verbundankers abtransportiert. Im Nassbohrverfahren wird in Setzrichtung Wasser zugeführt und das abgebaute und zerkleinerte Gestein ausgespült. Im Trockenbohrverfahren wird das abgebaute und zerkleinerte Gestein abgesaugt. In einem zweiten Schritt wird am setzungsrichtungsseitig abgewandten Ende des Verbundankers die chemische Masse mittels eines Auspressmechanismus in Richtung des Bohrlochgrunds gepresst, wobei die im Verbundanker befindliche Mörtelmasse durch die Austrittsöffnungen aus dem Verbundanker und dem Bohrkopf in das Bohrloch ausgebracht wird und entlang des Zwischenraums zwischen der Wandung der Bohrung und dem Aussenumfang des Ankerrohres verteilt wird.

Aus der DE 103 36 043 A1 ist ein derartiger gattungsgemässer selbstbohrender Verbundanker bekannt, der ein Ankerrohr mit einem ersten Ende, an dem ein Bohrkopf vorgesehen ist, und mit einem freien zweiten Ende aufweist. In dem Ankerrohr ist ein Innenrohr angeordnet, wobei zwischen dem Innenrohr und dem Ankerrohr wenigstens bereichsweise ein entlang einer Längsachse des Ankerrohrs verlaufender und als Ringspalt ausgebildeter Zwischenraum vorgesehen ist, der ein Zuführen von Wasser im Nassbohrverfahren ermöglicht. Am Bohrkopf sind dazu Auslassöffnungen angeordnet, die mit dem ersten Zwischenraum in Verbindung stehen und mit einem Innenraum im Innenrohr verbindbar sind. Im Innenraum des Innenrohrs ist eine in einem Folienbeutel verpackte auspressbare Masse angeordnet, die über die Auslassöffnungen im Bohrkopf ausgegeben werden kann. An dem zweiten freien Ende des Ankerrohrs ist ferner eine in der Längsachse liegende erste Öffnung angeordnet, die mit dem ersten Zwischenraum und mit dem Innenraum kommuniziert.

Die Aufgabe der vorliegenden Erfindung liegt darin, einen derartigen selbstbohrenden Verbundanker weiter zu verbessern.

Dieses wird durch die in Patentanspruch 1 wiedergegebenen Massnahmen erreicht. Demnach ist im Bereich des freien zweiten Endes wenigstens eine, in Bezug auf die Längsachse, radiale zweite Öffnung vorgesehen, die über den Zwischenraum mit der wenigstens einen Auslassöffnung in Verbindung steht. Durch diese Trennung der Zugänge zum Zwischenraum einerseits und zum Innenraum des Innenrohres andererseits kann eine Kreuzung der Spülwasserzuführung und der Auspressmittelzuführung vermieden werden. Es können separate Zuführungen an die axiale erste Öffnung und an die wenigstens eine radiale zweite Öffnung vorgesehen werden, wodurch übliche Bohrmotoren mit zentraler Spülwasserführung, bei denen kein zweiter Kreislauf für Hochdruck-Auspressmedien vorhanden ist, genutzt werden können.

Vorteilhaft sind zwei sich gegenüberliegend angeordnete radiale zweite Öffnungen vorgesehen, wodurch eine ausreichende Spülwasserzufuhr auch bei sich drehendem Verbundanker gewährleistet wird.

Von Vorteil ist es ferner, wenn die wenigstens eine radiale zweite Öffnung im Ankerrohr vorgesehen ist, wodurch die radiale zweite Öffnung von Aussen gut zugänglich sind und sie direkt in den Zwischenraum einmünden.

Günstig ist es ferner, wenn die wenigstens eine radiale zweite Öffnung in einem Abstand vom freien zweiten Ende axial beabstandet ist, wobei der Abstand dem 0,5- bis 2-fachen des Durchmessers des Ankerrohrs entspricht. Hierdurch wird erreicht, dass gängige Spülwasserzufuhrsysteme nutzbar sind bei gleichzeitiger Anwendung von gängigen Bohrmotoren mit zentraler Wasserzuführung.

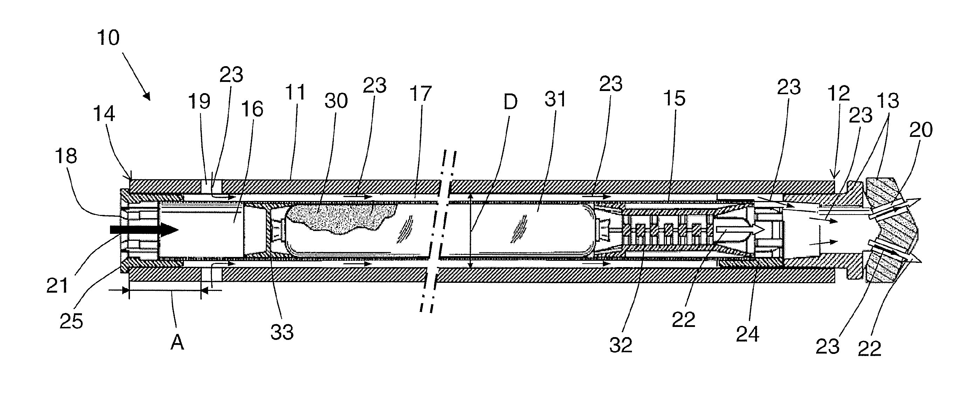

In der Zeichnung ist die Erfindung in einem Ausführungsbeispiel dargestellt. Die einzige Figur zeigt einen erfindungsgemässen selbstbohrenden Verbundanker im Längsschnitt.

In der Figur ist ein erfindungsgemässer selbstbohrender Verbundanker 10 wiedergegeben, der ein Ankerrohr 11 aus Stahl und ein, in diesem angeordnetes Innenrohr 15, z. B. aus einem Stahl oder Kunststoff, aufweist. In einem Innenraum 16 des Innenrohrs 15 ist eine, in einem Folienbeutel 31 verpackte auspressbare Masse 30, wie eine ein- oder mehrkomponentige chemische Verbundmasse, angeordnet. Das Ankerrohr 11 weist ein erstes Ende 12 mit einem eingesetzten Bohrkopf 13 und ein freies, zweites Ende 14 auf und definiert eine Längsachse L des Verbundankers 10. Das Innenrohr 15 ist mittels eines ersten Zentriermittels 24 und eines zweiten Zentriermittels 25 radial und axial am Ankerrohr 11 gehalten und dabei koaxial zur Längsachse L geführt.

Im Bereich des freien zweiten Endes 14 des Ankerrohrs 11 ist eine, bezogen auf die Längsachse L, axiale erste Öffnung 18 vorgesehen, die mit dem Innenraum 16 im Innenrohr 15 in Verbindung steht. Über diese axiale erste Öffnung 18 kann ein Druckmedium (erster Pfeil 21), wie z. B. Wasser, in den Innenraum 16 des Innenrohrs 15 unter Druck eingepresst werden, wodurch der im Innenrohr 15 angeordnete Folienbeutel 31 über ein im Innenrohr 15 zwischen der axialen ersten Öffnung 18 und dem Folienbeutel 31 geführtes Auspresselement 33 ausgepresst wird. Die in dem Folienbeutel 31 enthaltene Masse 30 wird dabei durch einen Mischkörper 32 geleitet, wo die Komponenten der Masse 30 miteinander vermengt werden. Die durchmischte Masse 30 kann dann in Richtung der zweiten Pfeile 22 aus dem Innenrohr 15 bzw. dem Mischkörper 32 in den Bohrkopf 13 und weiter durch an dem Bohrkopf 13 angeordnete Auslassöffnungen 20 in den Aussenraum des Verbundankers 10 austreten.

Über die Zentriermittel 24, 25 ist das Innenrohr 15 derart im Ankerrohr 11 positioniert, dass zwischen dem Innenrohr 15 und dem Ankerrohr 11 ein als Ringspalt ausgebildeter Zwischenraum 17 vorhanden ist. Im Bereich des freien zweiten Endes 14 sind zwei sich gegenüberliegende, in Bezug auf die Längsachse L radiale zweite Öffnungen 19 im Ankerrohr 11 vorgesehen, die über den Zwischenraum 17 mit den Auslassöffnungen 20 im Bohrkopf in Verbindung stehen. Der Zwischenraum 17 ermöglicht ein Zuführen von Wasser beim Nassbohrverfahren, welches über die radialen zweiten Öffnungen 19 in den Zwischenraum 17 (dritte Pfeile 23) bis in den Bohrkopf 13 und anschliessend über die Auslassöffnungen 20 an den Aussenraum abgegeben werden kann.

Die radialen zweiten Öffnungen 19 sind vorzugsweise in einem Abstand A vom freien zweiten Ende 14 des Ankerrohrs 11 axial beabstandet, wobei der Abstand A dem 0,5- bis 2-fachen des Durchmessers D des Ankerrohrs 11 entspricht.

Selbstverständlich können die Auslassöffnungen 20, der Zwischenraum 17 und die radialen zweiten Öffnungen 19 auch zum Absaugen von Bohrstaub im Trockenbohrverfahren genutzt werden.

## Patentansprüche

1. Selbstbohrender Verbundanker (10) für den Berg- und Tunnelbau, mit einem eine Längsachse (L) definierenden Ankerrohr (11), welches ein erstes Ende (12) mit einem Bohrkopf (13) und ein freies zweites Ende (14) aufweist, mit einem in dem Ankerrohr (11) angeordneten Innenrohr (15) mit einem Innenraum (16) zur Aufnahme einer auspressbaren Masse (30), mit einem zwischen dem Ankerrohr (11) und dem Innenrohr verlaufenden Zwischenraum (17), mit einer ersten in Bezug auf die Längsachse (L) axialen Öffnung (18) im Bereich des freien zweiten Endes (14), die mit dem Innenraum (16) im Innenrohr (15) kommuniziert, und mit wenigstens einer Auslassöffnung (20) im Bereich des Bohrkopfs (13),
**dadurch gekennzeichnet,**
**dass** im Bereich des freien zweiten Endes (14) wenigstens eine zweite in Bezug auf die Längsachse (L) radiale Öffnung (19) vorgesehen ist, die über den Zwischenraum (17) mit der wenigstens einen Auslassöffnung (20) in Verbindung steht.

2. Verbundanker nach Anspruch 1, **dadurch gekennzeichnet, dass** zwei sich gegenüberliegend angeordnete, radiale zweite Öffnungen (19) vorgesehen sind.

3. Verbundanker nach Anspruch 1 oder 2, **dadurch gekennzeichnet, dass** die wenigstens eine radiale zweite Öffnung (19) im Ankerrohr (11) vorgesehen ist.

4. Verbundanker nach einem der Ansprüche 1 bis 3, **dadurch gekennzeichnet, dass** die wenigstens eine radiale zweite Öffnung (19) in einem Abstand (A) vom freien zweiten Ende (14) axial beabstandet ist, wobei der Abstand (A) dem 0,5- bis 2-fachen des Durchmessers (D) des Ankerrohrs (11) entspricht.
